# EUROPÄISCHE PATENTSCHRIFT

(11) **EP 3 815 877 B1**
(45) Veröffentlichungstag und Bekanntmachung des Hinweises auf die Patenterteilung: **05.06.2024**
(21) Anmeldenummer: 20202547.4
(22) Anmeldetag: 19.10.2020
(51) Int. Cl.: B29C 49/28, B29C 49/48, B67C 3/22, B67C 3/26

(54) **AUTOMATISCHER GARNITURWECHSEL IN EINER GETRÄNKEABFÜLLANLAGE**
AUTOMATIC FITTING EXCHANGE IN A BEVERAGE FILLING UNIT
CHANGEMENT AUTOMATIQUE DE GARNITURE DANS UNE INSTALLATION DE REMPLISSAGE DE BOISSONS

(30) Priorität: 17.10.2019 DE 102019128019
(43) Veröffentlichungstag der Anmeldung: 05.05.2021
(73) Patentinhaber: KRONES AG, 93073 Neutraubling (DE)
(72) Erfinder: WINZINGER, Frank, 93073 Neutraubling (DE); SOBIECH, Bernd, 93073 Neutraubling (DE)
(74) Vertreter: Nordmeyer, Philipp Werner

(56) Entgegenhaltungen:
- EP-A1- 2 918 391
- DE-A1-102017 213 861
- DE-B3-102017 203 729
- DE-U1-202019 102 226

## Beschreibung

### Technisches Gebiet

Die Erfindung betrifft eine Vorrichtung zum Behandeln eines Behälters, vorzugsweise zum Blasformen des Behälters und/oder Befüllen des Behälters mit einem Füllprodukt und/oder Verschließen des Behälters mit einem Verschluss, sowie ein Verfahren zum Wechseln von Bauteilen einer solchen Vorrichtung. Das Verfahren und die Vorrichtung kommen bevorzugt in einer Getränkeabfüllanlage zum Abfüllen von Getränken, wie beispielsweise Wasser, karbonisiert oder nicht-karbonisiert, Softdrinks, Bier oder Mischgetränken, zur Anwendung.

### Stand der Technik

Auf dem Gebiet der Abfüllung von Behältern mit einem Füllprodukt, etwa Getränken, sind Abfüllanlagen in Rundläuferbauweise bekannt, bei denen die Behälter in einem Füllerkarussell mit dem Füllprodukt befüllt und die dann befüllten Behälter in einem nachgelagerten Verschließerkarussell verschlossen werden. Allgemein sind Behandlungskarusselle, beispielsweise das erwähnte Füllerkarussell und Verschließerkarussell, sowie etwaige Transportsterne zum Transport und zur Übergabe der Behälter vorgesehen.

Die Behandlungskarusselle und Transportsterne weisen Halterungen, Führungen, Klammern und dergleichen zum sicheren Transport der Behälter sowie Behandlungsorgane, etwa Füllventile und Verschließerköpfe, zur Behandlung der Behälter auf. Diese gemeinsam und einzeln als "Garnitur" bezeichneten Komponenten sind zumindest teilweise für ein bestimmtes Behälterformat und/oder ein bestimmtes Füllprodukt ausgelegt. Bei einem Wechsel des Füllprodukts und/oder Behälterformats ist somit normalerweise ein Garniturwechsel erforderlich. Dieser erfolgt etwa durch Austausch von Führungen, Halterungen und/oder Behandlungsorganen.

Üblicherweise erfolgt der Wechsel von Bauteilen einer Getränkeabfüllanlage, etwa zum Zweck der Wartung aber auch zur Änderung oder Anpassung der Garnitur, manuell; es sind jedoch auch voll- oder teilautomatische Verfahren bekannt. So beschreibt die EP 0 985 633 A1 einen automatischen Wechsel von Füllköpfen in einer Abfüllmaschine. Zu diesem Zweck ist an der Peripherie der Abfüllmaschine ein Bestückungs- und Wechselautomat vorgesehen. Ein Arbeitskopfwechsler für eine rotierende Füllmaschine geht aus der DE 693 04 419 T2 hervor. Zur Lagerung von Bauteilen, wie etwa Spülbehältern, beschreibt die EP 1 132 334 A1 eine Magazinvorrichtung.

Bestimmte Füllprodukte fordern eine im Wesentlichen sterile Abfüllung, um die Produktsicherheit zu gewährleisten und die Haltbarkeit des abgefüllten Füllprodukts sicherzustellen. Eine sterile, d.h. keimfreie oder zumindest keimarme, Abfüllung wird auch als "aseptische Abfüllung" bezeichnet. Um eine aseptische Abfüllung zu ermöglichen, erfolgt die Behandlung der Behälter, wie etwa ein Blasformen, Rinsen, Transportieren, Befüllen und Verschließen derselben, je nach Anwendung zumindest teilweise in Reinräumen, die auch als "Isolatoren" bezeichnet werden. In den Reinräumen wird beispielsweise über Filter und/oder das Zuführen eines Gases eine kontrollierte Atmosphäre geschaffen, um den jeweiligen produktspezifischen Vorgaben entsprechend eine keimfreie oder zumindest ausreichend keimarme und partikelarme Umgebung bereitzustellen.

Ein Austausch von Bauteilen, insbesondere ein Garniturwechsel etwa im Fall der Umstellung des Behälterformats, führt bei der aseptischen Abfüllung dazu, dass die Reinheit des Isolators gestört wird, da der Isolator geöffnet und Bauteile zwischen dem Innenraum des Isolators und der äußeren Umgebung ausgetauscht werden müssen. Im Anschluss an den Garniturwechsel ist eine vollständige Reinigung und Sterilisierung des Isolators sowie der Bauteile im Innern desselben erforderlich. Dieser Prozess kann mehrere Stunden dauern, in denen die reguläre Behälterbehandlung unterbrochen ist.

Sofern ein Austausch von Bauteilen nicht unbedingt erforderlich ist, sondern diese für den nächsten Produktionsdurchlauf lediglich verstellt oder in ihrer Position verändert werden müssen, erfolgt dies üblicherweise durch eine Bedienperson, die eine Türe des Reinraums zur Verstellung öffnen muss. Die DE 10 2017 213 861 A1 beschreibt eine Behälterbehandlungsanlage mit einem Reinraum und einem im Reinraum angeordneten Roboter und damit ein Verfahren gemäß dem Oberbegriff des Anspruchs 1 sowie eine Vorrichtung gemäß dem Oberbegriff des Anspruchs 9.

Die DE 10 2017 203 729 B3 beschreibt eine Speicher- und Verteileinheit für befüllte Behälter. Die DE 20 2019 102 226 U1 beschreibt ein Robotersystem für eine Behälterverarbeitungsanlage.

### Darstellung der Erfindung

Eine Aufgabe der Erfindung besteht darin, den Garniturwechsel und/oder eine Verstellung der Garnitur einer Vorrichtung zum Behandeln eines Behälters, vorzugsweise Blasformen des Behälters und/oder Befüllen des Behälters mit einem Füllprodukt und/oder Verschließen des Behälters mit einem Verschluss in einer Getränkeabfüllanlage, zu verbessern, insbesondere die reguläre Behandlungszeit einer solchen Vorrichtung zu optimieren.

Die Aufgabe wird durch ein Verfahren mit den Merkmalen des Anspruchs 1 sowie einer Vorrichtung mit den Merkmalen des unabhängigen Vorrichtungsanspruchs 9 gelöst. Vorteilhafte Weiterbildungen folgen aus den Unteransprüchen, der folgenden Darstellung der Erfindung sowie der Beschreibung bevorzugter Ausführungsbeispiele.

Das erfindungsgemäße Verfahren dient dem Wechsel und/oder zur Verstellung von Bauteilen einer Vorrichtung zum Behandeln eines Behälters. Die Vorrichtung ist vorzugsweise zum Blasformen eines Behälters und/oder Befüllen eines Behälters mit einem Füllprodukt und/oder Verschließen eines befüllten Behälters mit einem Verschluss eingerichtet. Besonders bevorzugt ist die Vorrichtung Teil einer Getränkeabfüllanlage zum Abfüllen von Getränken, wie beispielsweise Säften, Milch, Wasser, karbonisiert oder nicht-karbonisiert, Softdrinks, Tee, Bier und/oder Mischgetränken.

Es sei darauf hingewiesen, dass Bezeichnungen wie etwa "Behälter", "Verschluss", "Bauteil" und dergleichen der sprachlichen Einfachheit halber oft im Singular verwendet werden. Der Plural ist hierbei mitumfasst und zumeist bevorzugt, da die Vorrichtung und das Verfahren im Allgemeinen zur Behandlung mehrerer Behälter und zum Austausch mehrerer Bauteile vorgesehen sind.

Die Vorrichtung gemäß der Erfindung weist einen Reinraum, in dem eine sterile Atmosphäre ausgebildet oder ausbildbar ist, sowie zumindest eine Robotereinrichtung mit zumindest einem Roboterarm, der im Reinraum angeordnet ist, auf.

Unter der Bezeichnung "steril" ist hierbei eine im Wesentlichen keimfreie oder zumindest eine im Vergleich zur äußeren Umgebung des Reinraums keimarme Atmosphäre umfasst. Die Atmosphäre des Reinraums kann beispielsweise Sauerstoff, Stickstoff, Kohlendioxid, Luft oder Mischungen davon enthalten. Zudem kann sich die Atmosphäre im Reinraum auf Normaldruck (ca. 1 bar), einem Unterdruck oder Überdruck relativ zum Normaldruck befinden. Gemäß einem bevorzugten Ausführungsbeispiel befindet sich die Atmosphäre im Reinraum auf einem leichten Überdruck relativ zur äußeren Umgebung, wodurch auf wirksame Weise verhindert wird, dass Partikel, Keime und dergleichen aus der unreinen äußeren Atmosphäre in den Reinraum gelangen.

Vorzugsweise sind bewegte Teile im Reinraum, etwa Karusselle oder Karussellteile, gegenüber der Umgebung durch geeignete Dichtmittel abgedichtet.

An einem Karussell können eine Vielzahl von Stationen in äquidistanten Abständen entlang des Umfangs des Karussells angeordnet sein.

Eine Station kann etwa eine Blasstation (aufweisend eine zu wechselnde Blasform), eine Füllstation (aufweisend eine CIP-Kappe und ein Füllventil), eine Verschließstation (aufweisend einen Verschließkopf) usw. sein.

Ein Karussell wird während der Produktion vorzugsweise kontinuierlich angetrieben. Insbesondere während eines Bauteilwechsels kann zusätzlich ein Taktbetrieb vorgesehen sein.

Erfindungsgemäß demontiert der Roboterarm ein austauschbares Bauteil der Vorrichtung im Reinraum und tauscht dieses gegen ein anderes Bauteil aus. Alternativ oder zusätzlich verstellt der Roboterarm ein verstellbares Bauteil der Vorrichtung im Reinraum. In anderen Worten, ein im Reinraum installiertes Bauteil, beispielsweise ein Füllventil oder ein Teil eines Füllventils oder eine Halteklammer, wird vom Roboterarm demontiert, vorzugsweise als nicht länger genutztes Bauteil im Reinraum abgelegt, und ein anderes Bauteil, das sich vorzugsweise bereits im Reinraum befindet, wird vom Roboterarm anstelle des zuvor installierten Bauteils montiert. Alternativ oder zusätzlich findet eine Verstellung, d.h. Justierung, Positionsveränderung oder dergleichen, im Reinraum durch den Roboterarm statt.

Auf diese Weise kann ein Bauteilwechsel erfolgen, ohne dass der Reinraum geöffnet und von außen auf Anlagenteile im Innern des Reinraums zugegriffen werden muss. Eine Kontamination des Reinraums findet während des Bauteilwechsels nicht statt, so dass auf eine vollständige Reinigung und/oder Sterilisation des Reinraums nach dem Bauteilwechsel verzichtet werden kann. Somit kann die Prozessausfallzeit der Vorrichtung minimiert werden.

Alternativ kann es vorkommen, dass anstatt eines Austauschs von Teilen, Teile mechanisch verstellt werden müssen. Dabei kann es sich beispielsweise um eine Kurve oder Führungsschiene handeln, entlang welcher Behälter oder Verschlüsse geführt werden. Werden nach einem Produktionsprozess mit großen Verschlüssen beispielsweise kleinere Verschlüsse verarbeitet, so kann lediglich eine Verstellung der Zuführschiene nötig sein, nicht aber ein Austausch dieser.

Gemäß der Erfindung erstreckt sich der Zugriffsbereich des Roboterarms auf zwei Maschinen und/oder Transporteure und/oder zwei Karusselle.

Vorzugsweise sind die beiden gegeneinander auszutauschenden bzw. ausgetauschten Bauteile Bestandteil je einer Garnitur für unterschiedliche Behälterformate und/oder Füllprodukte, wodurch die Vorrichtung rasch auf ein geändertes Behälterformat, beispielsweise von Flaschen mit einem Füllvolumen von 1L auf Flaschen mit einem Füllvolumen von 1,5L, und/oder ein neues Füllprodukt umgestellt werden kann. Der Bauteilwechsel erfolgt somit vorzugsweise nicht zur Reparatur oder Wartung der Vorrichtung, sondern zum Zweck einer Formatumstellung. Der Austausch kann aber auch zur Wartung durchgeführt werden.

Vorzugsweise sind die beiden gegeneinander auszutauschenden bzw. ausgetauschten Bauteile Bestandteil einer Vorrichtung zur Herstellung von Behältern durch Blasformen, vorzugsweise eines Blaskarussells, einer Vorrichtung zum Befüllen der Behälter mit einem Füllprodukt, vorzugsweise eines Füllerkarussells, oder einer Vorrichtung zum Verschließen der Behälter mit Behälterverschlüssen, vorzugsweise eines Verschließerkarussells. In anderen Worten, eine Behandlung der Behälter, umfassend das Blasformen und/oder Befüllen und/oder Verschließen, findet mittels entsprechender Vorrichtungen teilweise oder vollständig im Reinraum statt, um eine aseptische Behandlung durchzuführen. Ein Garniturewchsel erfolgt daher besonders bevorzugt an einer oder mehreren dieser Behandlungsvorrichtungen.

Vorzugsweise werden Vorformlinge, die später zu Behältern mittels Medium expandiert werden, sterilisiert, was eine Anordnung einer Vorrichtung zum Blasformen innerhalb des Reinraums nötig macht, um die durch die Sterilisation erzeugte Sterilität der Vorformlinge bzw. Behälter aufrecht zu erhalten.

Es kann auch ein Formen des Behälters mittels des abzufüllenden Produkts durchgeführt werden. In diesem Fall kann beispielsweise auf eine Vorrichtung zur Blasformung verzichtet werden.

Zwischen den genannten Behandlungsvorrichtungen können noch weitere Vorrichtungen angeordnet sein, welche ebenfalls als Karussell ausgebildet sein können, u.a. eine Beschichtungsvorrichtung, beispielsweise zur Beschichtung von Kunststoffbehältern mit einer Silizium enthaltenden Schicht, eine Spülvorrichtung, beispielsweise ein Rinser oder ein (u.U. neben dem Vorformlingssterilisator ein weiterer) Sterilisator zum Sterilisieren von Behältern,

So können die beiden gegeneinander auszutauschenden bzw. ausgetauschten Bauteile beispielsweise Greifelemente, Haltevorrichtungen, Klammern oder Führungen zum Halten und/oder Transportieren von Behältern, Behandlungsorgane, vorzugsweise Füllventile, Verschließerköpfe oder Blasformen, vorzugsweise Blasformhälften, oder CIP-Kappen sein.

Vorzugsweise wird der Reinraum einer automatischen Reinigung und/oder Sterilisation unterzogen, beispielsweise in regelmäßigen Zeitintervallen, wobei das nicht montierte, d.h. ungenutzte, Bauteil vom Roboterarm an einem solchen Lagerplatz im Reinraum abgelegt wird, dass dieses beim Sterilisations- und/oder Reinigungsprozess des Reinraums mit einbezogen, d.h. synergetisch mit gereinigt bzw. sterilisiert wird.

Die Reinigung und/oder Sterilisation des Reinraums erfolgt beispielsweise mittels geeignet positionierter Düsen, die ein Reinigungsmittel und/oder Sterilisationsmittel auf die entsprechenden Flächen im Reinraum aufbringen. Indem die nicht genutzten Teile synergetisch mitbehandelt werden, kann auf eine gesonderte Reinigung und/oder Sterilisation derselben verzichtet werden.

Die Düsen zur Reinigung und/oder Desinfektion können auch auf dem Roboterarm angeordnet sein, wodurch vorteilhaft weniger Düsen eingesetzt werden müssen, da die vorhandenen Düsen entsprechend verfahrbar sind. Die Behandlungsmedien können dann entsprechend auch über flexible Zuleitungen an die Düsen herangeführt werden.

Ebenso ist möglich, dass mittels der Düsen auf dem Roboterarm die ausgewechselten und/oder auszuwechselnden Bauteile gereinigt werden.

Weiterhin ist möglich, dass die Behandlung der ausgewechselten und/oder auszuwechselnden Bauteile während eines Reinigungsprozesses stattfindet oder auch wenigstens teilweise während der laufenden Produktion.

Alternativ kann der Sterilisationsprozess auch die Anwendung von Hitze umfassen.

Insbesondere müssen die zu wechselnden und gewechselten Bauteile nicht aufwändig durch Schleusen oder dergleichen in den Reinraum eingebracht und daraus entfernt werden. Vielmehr können die nicht genutzten Teile im Reinraum verbleiben, so dass sie für einen erneuten Formatwechsel unmittelbar bereitstehen.

Zu diesem Zweck legt der Roboterarm das demontierte Bauteil vorzugsweise in einem Magazin, das sich im Reinraum befindet, ab. Anschließend entnimmt der Roboterarm in dieser Ausführungsform ein anderes Bauteil diesem oder einem anderen Magazin, das sich im Reinraum befindet, und montiert dieses an der Vorrichtung im Reinraum. Die zeitliche Abfolge der Demontage und Montage ist hierbei in gewissem Maß frei wählbar. So kann der Roboterarm ein Bauteil demontieren, ablegen, anschließend ein neues Bauteil aufnehmen und montieren. Es ist aber auch möglich, dass zunächst mehrere oder sogar alle auszutauschenden Bauteile demontiert und abgelegt werden, bevor die Montage der entsprechenden, die ersteren ersetzenden Bauteile stattfindet.

Es kann vorgesehen sein, dass sich ein Karussell während eines Wechselprozesses taktweise mindestens eine Umdrehung dreht. Pro Takt wird vorzugsweise jeweils eine Station (Blasstation, Füllventil, Verschließerkopf, CIP-Kappe, Klammer etc.) des Karussells in den Zugriffsbereich des Roboterarms gedreht, so dass dieser immer im Wesentlichen dieselbe Zugriffsposition (absolut gesehen) an einem jeweiligen Karussell hat.

In manchen Fällen kann es dennoch nötig sein, die zu wechselnden Bauteile zeitweise außerhalb der Reinraumatmosphäre der Vorrichtung zu lagern, beispielsweise, um den Reinraum etwas kleiner gestalten zu können oder um die Teile in andere, benachbarte Abfüllanlagen verwenden zu können. In diesem Fall können zumindest für manche Bauteile Schleusen vorgesehen sein.

Eine solche Schleuse kann einen Schleusenraum und zwei Türen aufweisen, eine erste Türe zwischen Schleusenraum und Reinraum und eine zweite Türe zwischen Schleusenraum und freier Umgebung bzw. Produktionshalle. Der Roboterarm kann insbesondere durch die erste Türe hindurch greifen, um die vorzugsweise sterilisierten Bauteile aus dem Schleusenraum zu holen. Insbesondere kann eine Schleuse eigene Vorrichtungen (z.B. Düsen) zur Reinigung und/oder Sterilisation der Bauteile vor dem Einbringen in den Reinraum aufweisen.

Egal ob das Magazin außerhalb oder innerhalb des Reinraums angeordnet ist, erstreckt sich der Wirkbereich bzw. Zugriffsbereich eines Roboterarms auf zwei Maschinen und/oder Transporteure und/oder zwei Karusselle (Transportsterne, Blasrad, Füllerkarussell, Verschließerkarussell etc. - im Folgenden der Einfachheit halber nur als Karusselle benannt), so dass mit demselben Arm zwei unterschiedliche Karusselle mit Bauteilen bestückt werden können.

Während eines Garniturwechsels an zwei Karussellen durch denselben Roboterarm können die beiden Karusselle abwechselnd bestückt werden. D.h., dass während eines Bauteilwechsels an einem ersten Karussell das zweite Karussell gedreht wird, so dass im nächsten Zug dieses schon an der korrekten Position steht, wenn der Roboterarm mit dem Wechsel am ersten Karussell fertig ist, keine Zeit verloren geht, wenn er ein Bauteil am zweiten Karussell wechselt.

Das stationsweise abwechselnde Wechseln an zwei Karussellen kann beispielsweise von Vorteil sein, wenn am Karussell selbst noch Arbeiten zur Sicherstellung der Funktion und/oder des Einbaus der Bauteile nach einem Bauteileinbau vollrichtet werden müssen, z.B. eine Verriegelung von Blasformen an ihren Haltern, was beispielsweise durch langsames Drehen des Karussells vorbei an stationären Kurven zur Betätigung der Verriegelungshebel bewirkt wird.

Erstreckt sich der Zugriffsbereich des Roboterarms auf mehrere Stationen eines ersten Karussells, können die Bauteile an mehreren Stationen des ersten Karussells unmittelbar nacheinander gewechselt werden, bevor der Roboterarm Bauteile an einem zweiten Karussell austauscht.

Das Magazin kann beispielsweise Füllventile und/oder CIP-Kappen enthalten. "CIP" steht für "Cleaning-In-Place", ein Verfahren bei dem die Füllventile zur Reinigung bzw. Sterilisation nicht ausgebaut werden müssen, sondern im eingebauten Zustand mit einem Reinigungsmedium oder Sterilisierungsmedium durchspült beziehungsweise bedämpft werden. Beispielsweise werden die Füllventile, insbesondere die mit dem Füllprodukt in Berührung kommenden Oberflächen, mittels Heißdampf thermisch sterilisiert. Dabei werden die Füllventile mit Heißdampf beaufschlagt und auf diese Weise auf die Sterilisierungstemperatur gebracht. Zu diesem Zweck werden CIP-Kappen auf die Füllventile aufgebracht, damit sich der Heißdampf im Innern der Füllventile sammeln und kontrolliert geführt und abgelassen werden kann. Das Magazin enthält nun beispielsweise Füllventile und/oder CIP-Kappen, die sich von der aktuell installierten Garnitur unterscheiden. Alternativ oder zusätzlich kann das Magazin beispielsweise Blasformen bzw. Blasformhälften für Behälterformen, die sich von der aktuell installierten Garnitur unterscheiden, enthalten. Ferner können mehrere Magazine im Reinraum angeordnet sein, um Bauteile unterschiedlicher Arten zu lagern und bereitzustellen.

Die Blasformen können (Schrauben, Kleinteile etc. ausgenommen) auch aus drei Teilen zusammengesetzt werden - aus zwei Blasformhälften und einem Bodenteil. Diese können entweder einzeln oder in einem zusammengesetzten Zustand aus einer Blasstation entnommen und/oder in diese eingefügt und/oder im Magazin abgelegt werden.

Vorzugsweise weist das Magazin bewegliche Teile auf, um die darin gelagerten Bauteile an eine Position zu bringen, an der ein gewünschtes Bauteil vom Roboterarm gegriffen und/oder während eines Sterilisations- und/oder Reinigungsprozess des Reinraums mit einem entsprechenden Medium beaufschlagt wird. Auf diese Weise kann die Unterbringung der Bauteile im Reinraum platzsparend und die Entnahme sowie Reinigung und/oder Sterilisation derselben zuverlässig erfolgen.

Insbesondere können normalerweise im Produktionsmodus von Karussellteilen (Blasstationsteilen, Füllventilteilen etc.) verdeckte Flächen an wechselbaren Bauteilen (z.B. Rückseite einer Blasform, Kuppelfläche der CIP-Kappen) im Reinigungs- oder Sterilisationsmodus, während sich das Bauteil im Magazin befindet, mitgereinigt oder mitsterilisiert werden.

Die Bauteile können hierzu in einer entsprechenden Orientierung im Magazin abgelegt werden, so dass Reinigungsmedium oder Sterilisationsmedium an diese Flächen herankommt.

Entsprechend kann es möglich sein, dass ein bestimmtes Bauteil über gewisse Zeiträume abwechselnd mal im Magazin und mal in der Einbauposition im Karussell an einer Station gereinigt und/oder sterilisiert wird. Dies hat den Vorteil, dass über gewisse Zeiträume alle Flächen miteinbezogen werden können.

Das Magazin kann beispielsweise paternosterartig aufgebaut sein, so dass die darin gelagerten Bauteile entlang eines ringförmigen Wegs transportierbar sind, wodurch sie auf baulich einfache Weise in eine Bereitstellungsposition, an der sie vom Roboterarm gegriffen und/oder gereinigt bzw. sterilisiert werden können, überführbar sind.

Vorzugsweise weist der Roboterarm ein Greifwerkzeug, beispielsweise ein zangenförmiges Greifwerkzeug, zum Greifen der Bauteile auf, wobei vorzugsweise Bauteile zumindest einer ersten Bauteilart und einer zweiten Bauteilart vom Greifwerkzeug gegriffen und gegen entsprechende Bauteile der Vorrichtung ausgetauscht werden. Auf diese Weise kann der Roboterarm ohne Umrüstarbeit, die im Allgemeinen eine Öffnung des Reinraums erfordern würde, mehrere Arten von Bauteilen handhaben.

Zu diesem Zweck weisen die Bauteile der ersten Bauteilart und die Bauteile der zweiten Bauteilart vorzugsweise einen identischen, kompatiblen und/oder genormten Handhabungsbereich, an dem die Bauteile vom Greifwerkzeug des Roboterarms gegriffen werden, auf. Der Handhabungsbereich umfasst beispielsweise einen vorstehenden Bolzen, der stets identisch oder ähnlich aufgebaut ist.

Es kann alternativ auch erforderlich oder sinnvoll sein, dass Bauteile unterschiedlichen Typs (bspw. Blasform und CIP-Kappe) mit unterschiedlichen Werkzeugen gegriffen werden. In diesem Fall kann ein zusätzliches Werkzeugmagazin im Zugriffsbereich des Roboterarms angeordnet sein, in welchem unterschiedliche Werkzeuge für den Roboterarm einlagerbar sind bzw. eingelagert sind. Eine Bestückung des Roboters kann automatisch erfolgen, beispielsweise über Schnellverriegelungen.

Insbesondere können das Werkzeugmagazin sowie die darin enthaltenen Werkzeuge in eine Reinigung bzw. Sterilisation einbezogen werden. Insbesondere können bei einer Sterilisation/Reinigung der Werkzeuge die Flächen der Werkzeuge einbezogen werden, die während des Einsatzes der Werkzeuge vom Roboterarm verdeckt werden, also beispielsweise Kupplungen (Teile der Schnellverriegelung).

Insbesondere kann sich dieses Werkzeugmagazin ebenfalls im Reinraum befinden. Vorzugsweise ist eine Vorrichtung zum Befüllen der Behälter mit einem Füllprodukt, umfassend etwa ein Füllerkarussell, mit zumindest einem Füllventil und einer zugeordneten CIP-Kappe vorgesehen, wobei die CIP-Kappe und das Füllventil als Einheit gleichzeitig vom Roboterarm ausgetauscht werden. Auf diese Weise kann der Garniturwechsel vereinfacht und beschleunigt werden.

Die oben genannte Aufgabe wird ferner durch eine Vorrichtung zum Behandeln eines Behälters, vorzugsweise zum Blasformen des Behälters und/oder Befüllen des Behälters mit einem Füllprodukt und/oder Verschließen des Behälters mit einem Verschluss in einer Getränkeabfüllanlage, gelöst. Die Vorrichtung weist auf: einen Reinraum, in dem eine sterile Atmosphäre ausbildbar ist; zumindest ein austauschbares Bauteil, angeordnet im Reinraum; und zumindest eine Robotereinrichtung mit zumindest einem Roboterarm, der im Reinraum angeordnet und eingerichtet ist, um das austauschbare Bauteil gegen ein anderes Bauteil auszutauschen und das Bauteil zu verstellen, wobei sich der Zugriffsbereich des Roboterarms auf zwei Maschinen und/oder Transporteure und/oder zwei Karusselle erstreckt.

Die Merkmale, technischen Wirkungen, Vorteile sowie Ausführungsbeispiele, die in Bezug auf das Verfahren beschrieben wurden, gelten analog für die Vorrichtung.

Vorzugsweise ist der Roboterarm von einem Faltenbalg oder einer anderen flexiblen Hülle ummantelt, um diesen von der Atmosphäre des Reinraums zu isolieren. So sind mechanische und/oder elektrische Elemente wie etwa Antriebe und Gelenke des Roboterarms gegenüber der Atmosphäre des Reinraums abgeschirmt, insbesondere um eine Sterilisation nach einem Wechsel vor Produktionsbeginn zu vermeiden.

Vorzugsweise ist aus den oben genannten Gründen eine Vorrichtung zur Herstellung von Behältern durch Blasformen, umfassend vorzugsweise ein Blaskarussell, und/oder eine Vorrichtung zum Befüllen der Behälter mit einem Füllprodukt, umfassend vorzugsweise ein Füllerkarussell, und/oder eine Vorrichtung zum Verschließen der Behälter mit Behälterverschlüssen, umfassend vorzugsweise ein Verschließerkarussell, vorgesehen, die zumindest teilweise im Reinraum angeordnet sind.

Vorzugsweise sind zumindest die Blasforminnenflächen und/oder die Austrittsflächen für Produkt am jeweiligen Füllventil und/oder die Verschließerköpfe zum Halten und Aufbringen der Verschlüsse im Reinraum angeordnet.

Vorzugsweise sind aus den oben genannten Gründen Mittel zur automatischen Reinigung und/oder Sterilisation des Reinraums vorgesehen, wobei der Roboterarm vorzugsweise eingerichtet ist, um das nicht montierte Bauteil an einem solchen Lagerplatz im Reinraum abzulegen, dass dieses beim Sterilisations- und/oder Reinigungsprozess des Reinraums mit einbezogen wird.

Unter Mitteln zur automatischen Reinigung oder Sterilisation können u.a. Abschwalldüsen verstanden werden. Bei dem Blasformer 111 kann es sich bei diesen Mitteln um die Blasdüsen zum Aufblasen der Behälter handeln.

Vorzugsweise ist aus den oben genannten Gründen zumindest ein Magazin zur Lagerung und Bereitstellung eines oder mehrerer austauschbarer Bauteile im Reinraum vorgesehen, wobei der Roboterarm vorzugsweise eingerichtet ist, um ein austauschbares Bauteil im Reinraum zu demontieren, im Magazin im Reinraum abzulegen, ein anderes Bauteil diesem oder einem anderen Magazin, das sich im Reinraum befindet, zu entnehmen und an der Vorrichtung im Reinraum zu montieren.

Insbesondere kann der Roboterarm an einer stationären Basis angeordnet sein.

Vorzugsweise weist das Magazin aus den oben genannten Gründen bewegliche Teile auf. Das Magazin ist beispielsweise paternosterartig aufgebaut. Das Magazin ist vorzugsweise eingerichtet, um die darin gelagerten Bauteile an eine Position zu bringen, an der ein gewünschtes Bauteil vom Roboterarm greifbar ist und/oder während eines Sterilisations- und/oder Reinigungsprozess des Reinraums mit einem entsprechenden Medium beaufschlagbar ist.

Im Einfachsten Fall handelt es sich bei dem Magazin lediglich um eine Ablagefläche. Insbesondere können Flächen im Magazin, auf denen Bauteile abgestellt werden, leicht geneigt sein (z.B. in einem Winkel von 0,5 bis 30° zur Horizontalen), damit flüssiges Reinigungs- oder Sterilisationsmittel abfließen kann.

Vorzugsweise weist der Roboterarm aus den oben genannten Gründen ein Greifwerkzeug, beispielsweise ein zangenförmiges Greifwerkzeug, zum Greifen der Bauteile auf, wobei vorzugsweise Bauteile zumindest einer ersten Bauteilart und einer zweiten Bauteilart vorgesehen sind und die Bauteile der ersten Bauteilart und die Bauteile der zweiten Bauteilart einen identischen, kompatiblen und/oder genormten Handhabungsbereich, an dem die Bauteile vom Greifwerkzeug des Roboterarms zu greifen sind, aufweisen. Der Handhabungsbereich umfasst vorzugsweise einen vorstehenden Bolzen.

Vorzugsweise ist aus den oben genannten Gründen eine Vorrichtung zum Befüllen der Behälter mit einem Füllprodukt, umfassend etwa ein Füllerkarussell, mit zumindest einem Füllventil und einer zugeordneten CIP-Kappe vorgesehen, wobei die CIP-Kappe und das Füllventil als eine Einheit aufgebaut und/oder handhabbar sind, so dass diese gleichzeitig vom Roboterarm austauschbar sind.

Vorzugsweise sind mehrere Robotereinrichtungen mit jeweils zumindest einem Roboterarm, angeordnet im Reinraum, vorgesehen, um den Bauteilwechsel zu vereinfachen und/oder zu beschleunigen.

Ferner können außerhalb des Reinraums weitere Roboter- oder Handhabungsvorrichtungen zur Belieferung der Roboter bzw. der Magazine mit Bauteilen angeordnet sein.

Weitere Vorteile und Merkmale der vorliegenden Erfindung sind aus der folgenden Beschreibung bevorzugter Ausführungsbeispiele ersichtlich.

Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung einer Getränkeabfüllanlage mit mehreren Stationen, umfassend einen Reinraum mit einem Füller und Verschließer zum Befüllen und Verschließen von Behältern;
- Figur 2: eine schematische Darstellung eines Reinraums mit einem Blasformer, Füller und Verschließer gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

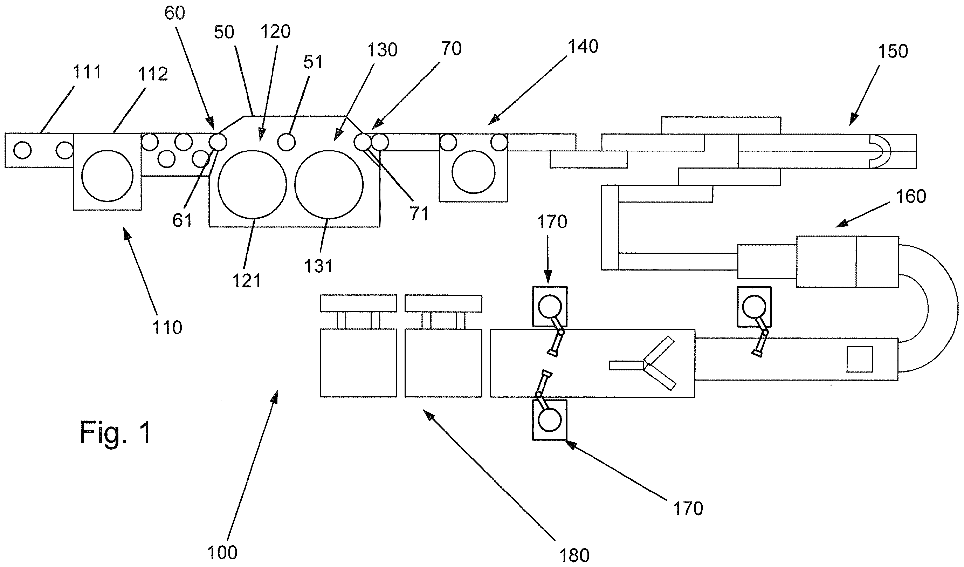

Die Figur 1 zeigt eine schematische Darstellung einer Getränkeabfüllanlage 100. Die Getränkeabfüllanlage 100 umfasst: eine Vorrichtung 110 zur Herstellung von Behältern durch Blasformen, hierin auch als "Blasformer" oder "Blasmaschine" bezeichnet; eine Vorrichtung 120 zum Befüllen der Behälter mit einem Füllprodukt, hierin auch als "Füller" bezeichnet; eine Vorrichtung 130 zum Verschließen der Behälter mit Behälterverschlüssen, hierin auch als "Verschließer" bezeichnet; eine Vorrichtung 140 zur Etikettierung der Behälter, hierin auch als "Etikettierer" bezeichnet; einen Puffer 150 zur temporären Pufferung von befüllten und etikettierten Behältern sowie zum Ausgleich etwaiger zeitweise unterschiedlicher Verarbeitungs-/Transportgeschwindigkeiten zwischen Anlagenteilen oder Störungen von einem Anlagenteil; eine Packvorrichtung 160 zum Verpacken der Behälter; Roboter 170 zur Lagenherstellung; und einen Palettierer 180, der die verpackten Behälter auf Ladungsträger zusammenfasst.

Die Getränkeabfüllanlage 100 weist somit mehrere Stationen auf, die von der Herstellung der Behälter über die Befüllung, das Verschließen, Etikettieren bis hin zum Verpacken derselben sukzessive durchlaufen werden. Zu diesem Zweck werden die Behälter beziehungsweise deren Vorformlinge (auch als "Preform" bezeichnet - eine Vorstufe der Behälter vor dem Blasformen oder Streckblasformen) entlang eines Förderwegs transportiert. Der Transport erfolgt mittels Transportsternen, Transportbänder und dergleichen, die in der Figur 1 teilweise schematisch dargestellt sind. Vorformlinge, Behälter, Behälterverschlüsse sowie dafür eingerichtete Halterungen/Klammern an den Transportsternen sind der Übersichtlichkeit halber in den Figuren nicht dargestellt. Die Transportsterne können allein der Förderung dienen oder können mit Behandlungseinrichtungen entsprechend den Stationen ausgestattet sein.

Es sei darauf hingewiesen, dass die hierin gezeigten Stationen der Gesamtanlage nur beispielhaft sind. So kann die Getränkeabfüllanlage 100 mit weniger, weiteren oder alternativen Bearbeitungsstationen, wie etwa einer Reinigungsvorrichtung, einer Trocknungsstation, einer Kleber-Aushärtestrecke, die in Verbindung mit der Vorrichtung 140 zur Etikettierung der Behälter oder einer etwaigen Verklebung der Behälter miteinander zur Gebindeherstellung in der Packvorrichtung 160 vorgesehen ist, einer Prüfvorrichtung zur Sicherstellung der Qualität, beispielsweise zum Prüfen, ob Fremdpartikel in die abgefüllten Behälter gelangt sind, und dergleichen ausgestattet sein. Ebenso können Stationen entfallen, wie etwa der Blasformer 110, wenn die Behälter bereits in der endgültigen, zu befüllenden Form angeliefert werden.

Der Blasformer 110 weist eine Einrichtung 111 zum Vorbereiten und Vorwärmen von Vorformlingen aus Kunststoff, vorzugsweise PET, auf. Die so vorbereiteten Vorformlinge werden an eine Blaseinrichtung 112 übergeben, in der die erwärmten Vorformlinge durch Blasen oder Streckblasen zu den zu befüllenden Behältern expandiert werden. Zu diesem Zweck werden die Vorformlinge in Blasformen, üblicherweise aufgebaut aus Blasformhälften, deren Hohlraumkonturder beabsichtigten Behälteraußenform entspricht, mit einem Gas unter Druck beaufschlagt und beim Streckblasen auch mit einer Streckstange/Reckstange gedehnt, um die Vorformlinge zu den Behältern aufzublasen.

Zwischen der Einrichtung 111 und der Blaseinrichtung 112 oder sogar vor der Einrichtung 111 kann sich eine Sterilisationseinrichtung befinden, die zur Sterilisation der Vorformlinge eingerichtet ist. Die Sterilisationseinrichtung kann zu diesem Zweck beispielsweise Elektronenstrahlung, UV-Strahlung, eine sterilisierende Flüssigkeit und/oder ein sterilisierendes Gas nutzen. Es sei darauf hingewiesen, dass die Sterilisationseinrichtung in Förderrichtung auch hinter der Blaseinrichtung 112 angeordnet sein kann oder auch ganz entfallen kann, wenn die Vorformlinge aufgrund der zur Herstellung der Behälter erforderlichen Hitze bereits ausreichend steril sind und dies auf dem Weg zur Weiterbehandlung auch bleiben.

Die so hergestellten Behälter treten nach Verlassen der Blaseinrichtung 112 in einen Reinraum 50 ein, der als Teil des Füllers 120 sowie Verschließers 130 angesehen werden kann. Im Reinraum 50 finden Behandlungen, etwa das Befüllen und/oder Verschließen der Behälter statt. Ferner kann sich im Reinraum eine Vorrichtung zum Sterilisieren und/oder Beschichten der Behälter befinden. All diese am Behälter durchgeführten Prozesse, wie etwa die Herstellung, Sterilisation, Beschichtung, Befüllung, das Verschließen, Etikettieren usw., fallen unter die Bezeichnung "Behandlung".

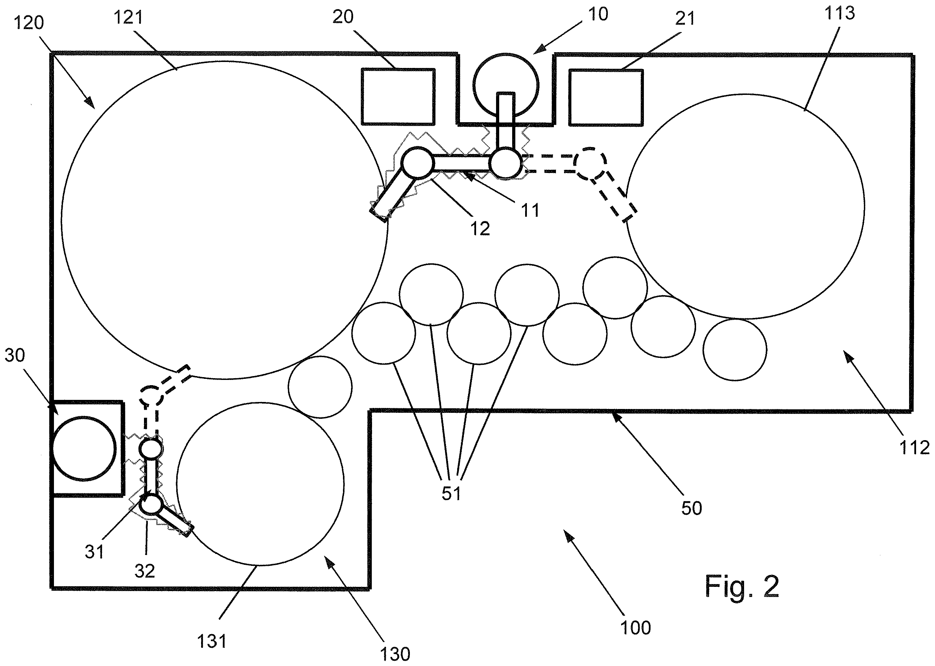

Alternativ oder zusätzlich kann sich im Reinraum 50 vollständig oder teilweise die Vorrichtung 110 zur Herstellung der Behälter befinden, wie dies weiter unten in Bezug auf das Ausführungsbeispiel der Figur 2 dargelegt ist.

Zurückkommend auf die Figur 1 kann der Reinraum 50 mit einer sterilen Atmosphäre versehen werden. Unter der Bezeichnung "steril" ist hierbei eine im Wesentlichen keimfreie oder zumindest eine im Vergleich zur äußeren Umgebung keimarme Atmosphäre umfasst. Die Atmosphäre des Reinraums kann beispielsweise Sauerstoff, Stickstoff, Kohlendioxid, Luft oder Mischungen davon enthalten. Zudem kann sich die Atmosphäre im Reinraum 50 auf Normaldruck (ca. 1 bar), einem Unterdruck oder Überdruck relativ zum Normaldruck befinden. Die technischen Mittel zur Erzeugung der sterilen Atmosphäre im Reinraum 50, wie etwa Leitungen, Ventile, Pumpen, HEPA-Filter und dergleichen, sind in den Figuren nicht dargestellt.

Die Behälter werden über eine Eingangsschleuse 60 in den Reinraum 50 eingeschleust und über eine Ausgangsschleuse 70 aus diesem ausgeschleust. Die Schleusen 60 und 70 sowie der Reinraum 50 enthalten Transportmittel, vorzugsweise rotierender Art, d.h. beispielsweise Transportsterne 61, 71, 51, mit denen die Behälter auf Kreissegmenten transportiert und entsprechend übergeben werden können. Neben reinen Transportsternen 61, 71, 51 umfasst der Reinraum 50 ein oder mehrere Karusselle sowie Organe zur Behandlung der Behälter.

Die Schleusen 60, 70 können auch einfache Aussparungen bzw. Löcher in der Wand des Reinraums 50 sein, die nur geringfügig größer sind als die Behälter.

Die Schleusen 60, 70 dienen dazu, die Behälter in den Reinraum 50 einzubringen und daraus auszubringen, ohne dass durch diese Zugänge ein merklicher atmosphärischer Austausch des Reinraums 50 mit der äußeren Umgebung stattfindet. Dies kann auf technisch unterschiedliche Weise realisiert werden. Beispielsweise kann der Rotor der Transportsterne 61, 71 in mehrere Zellen unterteilt sein, die zur Aufnahme der Behälter dienen. Die verschiedenen Zellen sind mit Dichtungen gegeneinander abgedichtet. Alternativ können Schleusenkammern vorgesehen sein, die einen schrittweisen Übergang von der äußeren Umgebung zum Innern des Reinraums 50 schaffen.

Gemäß einem bevorzugten Ausführungsbeispiel befindet sich die Atmosphäre im Reinraum 50 auf einem leichten Überdruck relativ zur äußeren Umgebung, wodurch auf wirksame Weise verhindert wird, dass Partikel, Keime und dergleichen aus der unreinen äußeren Atmosphäre in den Reinraum 50 eindringen.

Im Ausführungsbeispiel der Figur 1 umfasst der Füller 120 ein Füllerkarussell 121, das mit mehreren Greifelementen oder Haltevorrichtungen (in den Figuren nicht dargestellt) ausgestattet ist. Diese sind eingerichtet, um die Behälter vom benachbarten Transportstern 61 zu übernehmen und zu greifen. Die Greifelemente bzw. Haltevorrichtungen sind entlang eines Rotors des Füllerkarussells 121 angeordnet, der im Reinraum 50 umlaufen kann. Die Befüllung der Behälter erfolgt während des Transports entlang eines Kreissegments mittels am Füllerkarussell 121 angeordneten Füllorganen.

Analog umfasst der Verschließer 130 ein Verschließerkarussell 131 mit Greifelementen bzw. Haltevorrichtungen, das bzw. die die Behälter transportiert bzw. transportieren und mittels am Verschließerkarussell 131 angeordneten Verschließerköpfen verschließt.

Im Ausführungsbeispiel der Figur 1 erfolgen die Befüllung und das Verschließen der Behälter mittels zweier getrennter Karusselle 121, 131, die beide in ein und demselben Reinraum 50 angeordnet sind. Es sei darauf hingewiesen, dass die Behandlungsprozesse auch auf andere Weise auf ein oder mehrere Karusselle aufgeteilt werden können. So kann das Befüllen und Verschließen gegebenenfalls entlang unterschiedlicher Kreissegmente eines einzigen Karussells erfolgen. Ebenso können eventuell lineare Transportmittel angewendet werden.

Die Figur 2 zeigt einen Ausschnitt der Getränkeabfüllanlage 100 gemäß einem weiteren Ausführungsbeispiel und auf vergrößerte Weise, umfassend den Reinraum 50, wobei zusätzlich zum Füller 120 und Verschließer 130 zumindest ein Teil des Blasformers 110 im Reinraum 50 angeordnet ist. Die Übergabe der Behälter in den Reinraum 50 hinein und aus dem Reinraum 50 heraus, umfassend die Eingangsschleuse 60 und die Ausgangsschleuse 70, sind in der Figur 2 nicht gezeigt.

Der Blasformer weist ein Blaskarussell 113 auf, das als Teil der Blaseinrichtung 112 die erwärmten und vorzugsweise sterilen und/oder sterilisierten Vorformlinge während des Transports entlang eines Kreissegments durch Blasen oder Streckblasen zu den zu befüllenden Behältern expandiert.

Zu diesem Zweck sind Blasorgane oder auch Blasstationen (in den Figuren nicht dargestellt) am Blaskarussell 113 angeordnet, um die Vorformlinge in Blasformen, deren Hohlraumkontur der beabsichtigten Behälteraußenform entspricht, mit einem Gas und/oder einer Flüssigkeit unter Druck zu beaufschlagen und beim Streckblasen auch mit einer Streckstange/Reckstange zu dehnen, um die Vorformlinge zu den Behältern aufzublasen bzw. zu expandieren. Die Garnituren an einer Blasstation können folgende sein: zwei Blasformhälften, eine Bodenform, eine Blasdüse, eine Reckstange, ein Ventil zum Auslass von Expandiermedium zur Blasdüse. Eine weitere Garnitur an dem Blaskarussell, welches jedoch mit sämtlichen Blasstationen, bzw. mit deren Reckstangen zusammenwirkt, kann eine stationäre Reckkurve oder Blasdüsenkurve sein, welche die Reckstange bzw. die Blasdüse während ihres Umlaufs in ihrer Position steuern.

Zum automatischen Wechsel von Garnituren, wie etwa Greifelementen, Haltevorrichtungen, Klammern, Verschließköpfen, Füllventilen, Blasformhälften und dergleichen, befindet sich eine Robotereinrichtung 10 zumindest teilweise im Reinraum 50. Hierbei ist zumindest ein Roboterarm 11 der Robotereinrichtung 10 im Reinraum angeordnet, während sich Aktuatoren, Medienzugänge und dergleichen außerhalb des Reinraums 50 befinden können.

Die Robotereinrichtung 10 ist so zwischen dem Füllerkarussell 121 und dem Blaskarussell 113 angeordnet, dass der Roboterarm 11 in zumindest einen Teilkreis beider Karusselle 121, 113 eingreifen kann.

Ferner befinden sich im Einflussbereich bzw. Zugriffsbereich des Roboterarms 11 ein oder mehrere Magazine 20, 21, die zur Lagerung und Bereitstellung von auszutauschenden und/oder bereits ausgetauschten Bauteilen, hierin auch als "Wechselteile" oder Garnituren bezeichnet, im Reinraum 50 fungieren.

Im vorliegenden Beispiel enthält das Magazin 20 beispielsweise Füllventile und/oder CIP-Kappen. "CIP" steht für "Cleaning-In-Place", ein Verfahren bei dem die Füllventile zur Reinigung bzw. Sterilisation nicht ausgebaut werden müssen, sondern im eingebauten Zustand mit einem Reinigungsmedium oder Sterilisierungsmedium durchspült beziehungsweise bedämpft werden.

Beispielsweise werden die Füllventile, insbesondere die mit dem Füllprodukt in Berührung kommenden Oberflächen, mittels Heißdampf thermisch sterilisiert. Dabei werden die Füllventile mit Heißdampf beaufschlagt und auf diese Weise auf die Sterilisierungstemperatur gebracht. Zu diesem Zweck werden CIP-Kappen auf die Füllventile aufgebracht, damit sich der Heißdampf im Innern der Füllventile sammeln, kontrolliert geführt und abgelassen werden kann. Das Magazin 20 enthält nun beispielsweise Füllventile und/oder CIP-Kappen, die sich von der aktuell installierten Garnitur unterscheiden.

Das in diesem Ausführungsbeispiel gezeigte weitere Magazin 21 enthält beispielsweise Blasformhälften für Behälterformen, die sich von der aktuell installierten Garnitur unterscheiden. Zusätzlich kann das Magazin Bodenformen, Blasdüsen, Reckstangen etc. enthalten, die sich ebenfalls von der im Einsatz befindlichen Garnitur (in der jeweiligen Blasstation) unterscheiden.

Der Roboterarm 11 kann somit zumindest auf Komponenten zweier unterschiedlicher Garnituren zugreifen, um die Getränkeabfüllanlage 100 einem Formatwechsel unterziehen zu können, ohne dass von außen in den Reinraum 50 eingegriffen werden muss.

Der Roboterarm 11 ist vorzugsweise zumindest teil- bzw. bereichsweise (der eigentliche Endeffektor (Greifer) kann ausgenommen sein) von einem Faltenbalg 12 oder einer anderen flexiblen Hülle ummantelt, um diesen von der Atmosphäre des Reinraums 50 zu isolieren. So sind mechanische und/oder elektrische Elemente wie etwa Antriebe und Gelenke des Roboterarms 11 gegenüber der Atmosphäre des Reinraums 50 abgeschirmt, beispielsweise um eine Sterilisation nach einem Wechsel vor Produktionsbeginn zu vermeiden. Abschnitte von Antrieben und Gelenken, insbesondere Hinterschnitte, sind sehr schwer zu sterilisieren.

Im Bereich des Verschließerkarussells 131 befindet sich im vorliegenden Ausführungsbeispiel eine weitere Robotereinrichtung 30, die im Gegensatz zur ersten Robotereinrichtung 10 beispielhaft im Wesentlichen vollständig im Reinraum 50 angeordnet ist. Die Robotereinrichtung 30 weist einen Roboterarm 31 auf, der eingerichtet ist, um zumindest in einen Teilkreis des Füllerkarussells 121 und des Verschließerkarussells 131 eingreifen zu können. Der Roboterarm 31 ist vorzugsweise von einem Faltenbalg 32 oder einer anderen flexiblen Hülle ummantelt, um diesen von der Atmosphäre des Reinraums 50 zu isolieren. So sind mechanische und/oder elektrische Elemente wie etwa Antriebe und Gelenke des Roboterarms 31 gegenüber der Atmosphäre des Reinraums 50 abgeschirmt, da eine Sterilisation/Reinigung derselben schwierig ist und um eine Sterilisation nach einem Wechsel vor Produktionsbeginn zu vermeiden.

Die erste Robotereinrichtung 10 kann bzgl. Anordnung im Reinraum oder außerhalb so ausgestaltet sein wie die zweite Robotereinrichtung 30 und umgekehrt.

Gegebenenfalls kann auf die zweite Robotereinrichtung 30 zwischen Verschließer 130 und Füller 120 verzichtet werden, wenn z.B. zwei Verschließerkarusselle vorhanden sind, die alternativ von den Behältern durchlaufen werden können oder wenn am Verschließer 130 keine Garnituren zu wechseln sind.

Genauso kann auf die zweite Robotereinrichtung 30 verzichtet werden, wenn z.B. das Blasrad außerhalb des Reinraums angeordnet ist (was aber nicht ausschließt, dass eine "unsterile" Robotereinrichtung am Blasrad vorhanden ist).

Der zweiten Robotereinrichtung 30 kann ebenfalls ein Magazin (oder auch mehrere - etwa eines für Verschließerköpfe, das andere für Füllergarnituren) zugeordnet sein.

Im Reinraum 50 können somit auch mehrere Roboterarme 11, 31 einer oder mehrerer Robotereinrichtungen 10, 30 angeordnet sein. Dabei können die Roboterarme 11, 31 für den Austausch je einer Art von auszutauschenden Bauteilen eingerichtet sein. Alternativ können die Roboterarme 11, 31 zur Handhabung unterschiedlicher Bauteilarten bzw. Wechselteilarten vorgesehen sein. Ebenso sind Mischformen möglich, etwa derart, dass ein oder mehrere einzelne Roboterarme 31 nur für spezielle Arten von Wechselteilen und ein oder mehrere andere Roboterarme 11 für unterschiedliche Wechselteile eingerichtet sind.

Die nicht benötigten Bauteile, insbesondere Wechselteile bzw. Garniturteile, können innerhalb des Reinraums 50 an einem Lagerplatz abgelegt werde, so dass diese bei den normalen Sterilisations-und/oder Reinigungsprozessen des Reinraums 50 mit einbezogen werden. Zu diesem Zweck befinden sich die Magazine 20, 21 im Reinraum 50 und können ihrerseits bewegbare Elemente aufweisen, um die Bauteile dem zumindest einen Roboterarm 11, 31 zur Verfügung zu stellen und so zu lagern, dass sie im Sterilisations- und/oder Reinigungsprozess des Reinraums 50 mit dem entsprechenden Medium beaufschlagt werden. Vorzugsweise sind die Magazine 20, 21 vollständig reinigbar.

Insbesondere kann am Roboterarm 11, 31 selbst eine Reinigungsdüse vorhanden sein, um die einzelnen Bauteile im Magazin und/oder im eingebauten Zustand am Karussell mit Dampf, Gas oder Flüssigkeit zu sterilisieren/reinigen. Eine derartige Düse kann parallel zu den Greifwerkzeugen am Roboterarmende (ständig) angeordnet sein. Alternativ kann eine Düse inkl. Schlauch zur Versorgung aus einem Werkzeugmagazin mittels eines Greifwerkzeugs entnommen werden.

Auf diese Weise oder wie oben angesprochen (Düsen im Magazin) kann eine Reinigung der Bauteile im Magazin während des Produktionsmodus erfolgen, insbesondere auch an den Flächen, die im eingebauten Zustand von anderen Bauteilen verdeckt sind.

Das eine oder die mehreren Magazine 20, 21 können wie die Robotereinrichtung(en) 10, 30 zumindest teilweise, insbesondere antriebsseitig, außerhalb des Reinraums 50 angeordnet sein.

Ein oder mehrere der Magazine 20, 21 können paternosterartig oder (transport-)sternartig ausgeführt sein, so dass die darin gelagerten Wechselteile entlang eines ringförmigen Wegs transportierbar sind, wodurch sie auf baulich einfache Weise in eine Bereitstellungsposition, an der sie vom entsprechenden Roboterarm 11, 31 gegriffen und/oder gereinigt bzw. sterilisiert werden können, überführbar sind.

Ein oder mehrere der Roboterarme 11, 31 können multifunktional sein, so dass mit einem Greifwerkzeug unterschiedliche Wechselteile gegriffen werden können. Alternativ oder zusätzlich können die Roboterarme 11, 31 mit einem wechselbaren Adapter ausrüstbar sein, wobei die Adapter für einzelne Wechselteilarten oder Wechselteilgruppen ausgelegt sind. Im Falle von wechselbaren Greifwerkzeugen sind diese bevorzugt innerhalb des Reinraums 50 angeordnet, so dass auch die Greifwerkzeuge in regulären Reinigungs- und/oder Sterilisationsprozessen mitumfasst sind.

Die Greifwerkzeuge können in gesonderten Magazinen im Reinraum 50, welche ebenso in die Reinigung und/oder Sterilisation des Reinraums 50 einbezogen sind, gelagert sein.

Es ist denkbar, dass die Zugriffsbereiche von zwei Roboterarmen 11, 31 so groß sind (oder diese sind nebeneinander angeordnet), dass sich Robotereinrichtungen 10, 30 gegenseitig reinigen oder sterilisieren können.

Alternativ ist es möglich, dass Wechselteile, seien es Teile der Getränkeabfüllanlage 100 und/oder der Robotereinrichtung(en) 10, 30, nicht oder nicht nur in den üblichen Reinigungs- und/oder Sterilisationskreislauf einbezogen werden, sondern dass diese einem gesonderten Prozess unterzogen werden. Zu diesem Zweck können im Reinraum 50 Reinigungssysteme, beispielsweise Spülstationen, angeordnet sein, die auf diese Teile gerichtet sind und einzeln, abseits der üblichen Behandlungsprozesse ansteuerbar sind.

Ferner ist denkbar, dass eine Robotereinrichtung 11, 31 zusammengesetzte Blasformen aus dem Blasformer entnimmt und diese zu deren Reinigung an die Füllventile des Füllers 120 anstatt der CIP-Kappen einsetzt.

Ferner können der eine oder die mehreren Roboterarme 11, 31 zusätzlich zur Wechselfunktion eine Reinigungsfunktion umfassen. Zu diesem Zweck können ein oder mehrere der Roboterarme 11, 31 je eine oder mehrere Reinigungsdüsen aufweisen, um ein Reinigungs- und/oder Sterilisationsmedium auf die entsprechenden Teile, d.h. die Wechselteile der Getränkeabfüllanlage 100 und/oder der Robotereinrichtung(en) 10, 30, aufzubringen.

Vorzugsweise ist eine stationäre Robotereinrichtung 30 vorgesehen, welche Zugriff auf Verschließköpfe des Verschließerkarussells 131 und Füllventile des Füllerkarussells 121 hat.

Alternativ oder zusätzlich können das Blaskarussell 113, Füllerkarussell 121, Verschließerkarussell 131 und die stationäre Robotereinrichtung 10 und/oder 30 so angeordnet sein, dass deren Roboterarm 31 Zugriff auf alle drei Karusselle 113, 121, 131 hat.

In den Bauteilwechsel, insbesondere Formatwechsel, können auch die oben genannten CIP-Kappen einbezogen werden. Während diese beispielsweise durch eine automatische Vorrichtung nach und nach bei Drehung des Füllerkarussells 121 an den Füllventilen angeordnet werden, kann während der Drehung des Füllerkarussells 121 die Robotereinrichtung 10, 30 gleichzeitig die Füllventile tauschen. Vorzugsweise sind CIP-Kappen unterschiedlicher Durchmesser auswählbar. Alternativ ist ein Typ von CIP-Kappen für mehrere oder alle Ventiltypen, d.h. Ventilbauformen, anwendbar.

Im Fall des CIP-Kappenwechsels kann der betreffende Roboterarm 11, 31 so eingerichtet sein, dass dieser die CIP-Kappen, sofern diese einen Hohlraum wenigstens teilweise umschließen, wenden kann, so dass die CIP-Kappen entleert und Flüssigkeitsreste entfernt werden können. Auf diese Weise wird verhindert, dass die CIP-Kappen Verkeimungsnester bilden.

Ferner können die CIP-Kappen und die Füllventile paarweise eine Einheit bilden, so dass beide gleichzeitig vom Roboterarm 11, 31 austauschbar sind.

Ein oder mehrere der Roboterarme 11, 31 können mit zwei oder mehr Arbeitsköpfen bzw. Greifwerkzeugen ausgestattet sein, so dass auf diese Weise durch einen Roboterarm 11, 31 unterschiedliche Typen von Wechselteilen ausgewechselt werden können. Die mehreren Arbeitsköpfe werden in diesem Fall stets mitbewegt, wobei ein Arbeitskopf vorzugsweise ein auf ein entsprechendes Karussell 113, 121, 131 abgestimmtes Werkzeug aufweist.

Beim Werkzeug handelt es sich vorzugsweise um einen zangenförmigen Greifer, der so gestaltet ist, dass er an vordefinierten Angriffspositionen die Wechselteile greifen kann.

Vorzugsweise sind die Wechselteile sowohl des Füllers 120 als auch des Blasformers 110 mit denselben bzw. kompatiblen Angriffspositionen ausgestattet. Bei den Blasformen umfasst die Angriffsposition vorzugsweise einen nach außen vorstehenden Bolzen pro Blasformhälfte. Bolzen dieser Form können auch bei den CIP-Kappen unten angebracht sein, so dass das ein und dasselbe Greifwerkzeug beide Wechselteiltypen greifen kann.

Somit sind die Angriffspositionen mehrerer Typen von Wechselteilen, vorzugsweise betreffend Wechselteile des Füllers 120 und Wechselteile des Blasformers 110, für das Greifwerkzeug eines Roboterarms 11, 31 kompatibel, beispielsweise genormt, eingerichtet. Die Angriffsposition ist hierin auch als "Handhabungsbereich" bezeichnet.

### Bezugszeichenliste

- 10: Robotereinrichtung
- 11: Roboterarm
- 12: Faltenbalg
- 20: Magazin
- 21: Magazin
- 30: Robotereinrichtung
- 31: Roboterarm
- 32: Faltenbalg
- 50: Reinraum
- 51: Transportstern
- 60: Eingangsschleuse
- 61: Transportstern
- 70: Ausgangsschleuse
- 71: Transportstern

- 100: Getränkeabfüllanlage
- 110: Blasformer
- 111: Einrichtung zum Vorbereiten und Vorwärmen von Vorformlingen
- 112: Blaseinrichtung
- 113: Blaskarussell
- 120: Füller
- 121: Füllerkarussell
- 130: Verschließer
- 131: Verschließerkarussell
- 140: Vorrichtung zur Etikettierung von Behältern
- 150: Puffer
- 160: Packvorrichtung
- 170: Roboter
- 180: Palettierer

## Patentansprüche

1. Verfahren zum Wechseln von Bauteilen einer Vorrichtung zum Behandeln eines Behälters, vorzugsweise zum Blasformen des Behälters und/oder Befüllen des Behälters mit einem Füllprodukt und/oder Verschließen des Behälters mit einem Verschluss in einer Getränkeabfüllanlage (100), wobei die Vorrichtung einen Reinraum (50), in dem eine sterile Atmosphäre ausgebildet ist, sowie zumindest eine Robotereinrichtung (10, 30) mit zumindest einem Roboterarm (11, 31), der im Reinraum (50) angeordnet ist, aufweist, und
der Roboterarm (11, 31) ein austauschbares Bauteil der Vorrichtung im Reinraum (50) demontiert und gegen ein anderes Bauteil austauscht und/oder ein verstellbares Bauteil im Reinraum (50) verstellt,
**dadurch gekennzeichnet, dass**
sich der Zugriffsbereich des Roboterarms (11, 31) auf zwei Maschinen und/oder Transporteure und/oder zwei Karusselle erstreckt.

2. Verfahren nach Anspruch 1, **dadurch gekennzeichnet, dass** die beiden gegeneinander ausgetauschten Bauteile Bestandteil je einer Garnitur für unterschiedliche Behälterformate und/oder Füllprodukte sind, und/oder
die beiden gegeneinander ausgetauschten Bauteile Bestandteil einer Vorrichtung (110) zur Herstellung von Behältern durch Blasformen, vorzugsweise eines Blaskarussells (113), einer Vorrichtung (120) zum Befüllen der Behälter mit einem Füllprodukt, vorzugsweise eines Füllerkarussells (121), und/oder einer Vorrichtung (130) zum Verschließen der Behälter mit Behälterverschlüssen, vorzugsweise eines Verschließerkarussells (131) ist, und/oder
die beiden gegeneinander ausgetauschten Bauteile Greifelemente, Haltevorrichtungen, Klammern oder Führungen zum Halten und/oder Transportieren von Behältern, Behandlungsorgane, vorzugsweise Füllventile, Verschließerköpfe oder Blasformen, vorzugsweise Blasformhälften, oder CIP-Kappen sind oder aufweisen.

3. Verfahren nach einem der vorigen Ansprüche, **dadurch gekennzeichnet, dass** der Reinraum (50) einer automatischen Reinigung und/oder Sterilisation mittels Hitze oder eines Fluids unterzogen wird, vorzugsweise in regelmäßigen Zeitintervallen, und das nicht montierte Bauteil vom Roboterarm (11, 31) an einem solchen Lagerplatz im Reinraum (50) abgelegt wird, dass dieses beim Sterilisations- und/oder Reinigungsprozess des Reinraums (50) mit einbezogen wird.

4. Verfahren nach einem der vorigen Ansprüche, **dadurch gekennzeichnet, dass** der Roboterarm (11, 31) das austauschbare Bauteil demontiert, in einem Magazin (20, 21) im Reinraum (50) ablegt, ein anderes Bauteil diesem oder einem anderen Magazin (20, 21), das sich im Reinraum (50) befindet, entnimmt und montiert.

5. Verfahren nach Anspruch 4, **dadurch gekennzeichnet, dass** das Magazin (20, 21) bewegliche Teile aufweist, vorzugsweise paternosterartig aufgebaut ist, um die darin gelagerten Bauteile an eine Position zu bringen, an der ein gewünschtes Bauteil vom Roboterarm (20, 21) gegriffen und/oder während eines Sterilisations- und/oder Reinigungsprozess des Reinraums (50) mit einem entsprechenden Medium beaufschlagt wird.

6. Verfahren nach einem der vorigen Ansprüche, **dadurch gekennzeichnet, dass** der Roboterarm (11, 31) ein Greifwerkzeug, vorzugsweise ein zangenförmiges Greifwerkzeug, zum Greifen der Bauteile aufweist und Bauteile zumindest einer ersten Bauteilart und einer zweiten Bauteilart vom Greifwerkzeug gegriffen und gegen entsprechende Bauteile ausgetauscht werden.

7. Verfahren nach Anspruch 6, **dadurch gekennzeichnet, dass** die Bauteile der ersten Bauteilart und die Bauteile der zweiten Bauteilart einen identischen, kompatiblen und/oder genormten Handhabungsbereich, an dem die Bauteile vom Greifwerkzeug des Roboterarms (11, 31) gegriffen werden, aufweisen, wobei der Handhabungsbereich vorzugsweise einen vorstehenden Bolzen umfasst.

8. Verfahren nach einem der vorigen Ansprüche, **dadurch gekennzeichnet, dass** eine Vorrichtung (120) zum Befüllen der Behälter mit einem Füllprodukt, umfassend vorzugsweise ein Füllerkarussell, mit zumindest einem Füllventil und einer zugeordneten CIP-Kappe im Reinraum (50) vorgesehen ist, wobei die CIP-Kappe und das Füllventil als eine Einheit gleichzeitig vom Roboterarm (11, 31) ausgetauscht werden.

9. Vorrichtung zum Behandeln eines Behälters, vorzugsweise zum Blasformen des Behälters und/oder Befüllen des Behälters mit einem Füllprodukt und/oder Verschließen des Behälters mit einem Verschluss in einer Getränkeabfüllanlage (100), wobei die Vorrichtung aufweist:
einen Reinraum (50), in dem eine sterile Atmosphäre ausbildbar ist;
zumindest ein austauschbares und/oder verstellbares Bauteil, angeordnet im Reinraum (50); und
zumindest eine Robotereinrichtung (10, 30) mit zumindest einem Roboterarm (11, 31), der im Reinraum (50) angeordnet und eingerichtet ist, um das austauschbare Bauteil gegen ein anderes Bauteil auszutauschen und/oder das verstellbare Bauteil im Reinraum (50) zu verstellen, wobei der Roboterarm (11, 31) vorzugsweise zumindest bereichsweise von einem Faltenbalg (12, 32) oder einer anderen flexiblen Hülle ummantelt ist,
**dadurch gekennzeichnet, dass**
sich der Zugriffsbereich des Roboterarms (11, 31) auf zwei Maschinen und/oder Transporteure und/oder zwei Karusselle erstreckt.

10. Vorrichtung nach Anspruch 9,
**dadurch gekennzeichnet, dass** eine Vorrichtung (110) zur
Herstellung von Behältern durch Blasformen, umfassend vorzugsweise ein Blaskarussell (113), und/oder eine Vorrichtung (120) zum Befüllen der Behälter mit einem Füllprodukt, umfassend vorzugsweise ein Füllerkarussell (121), und/oder eine Vorrichtung zum Verschließen der Behälter mit Behälterverschlüssen, umfassend vorzugsweise ein Verschließerkarussell (131), vorgesehen sind, die zumindest teilweise im Reinraum (50) angeordnet sind.

11. Vorrichtung nach Anspruch 9 oder 10, **dadurch gekennzeichnet, dass** Mittel zur automatischen Reinigung und/oder Sterilisation des Reinraums (50) vorgesehen sind und der Roboterarm (11, 31) eingerichtet ist, um das nicht montierte Bauteil an einem solchen Lagerplatz im Reinraum (50) abzulegen, dass dieses beim Sterilisations- und/oder Reinigungsprozess des Reinraums (50) mit einbezogen wird.

12. Vorrichtung nach einem der Ansprüche 9 bis 10, **dadurch gekennzeichnet, dass** zumindest ein Magazin (20, 21) zur Lagerung und Bereitstellung eines oder mehrerer austauschbarer Bauteile im Reinraum (50) vorgesehen ist und der Roboterarm (11, 31) eingerichtet ist, um ein austauschbares Bauteil im Reinraum (50) zu demontieren, im Magazin (20, 21) im Reinraum (50) abzulegen, ein anderes Bauteil diesem oder einem anderen Magazin (20, 21), das sich im Reinraum (50) befindet, zu entnehmen und im Reinraum (50) zu montieren.

13. Vorrichtung nach Anspruch 12,
**dadurch gekennzeichnet, dass** das Magazin (20, 21) bewegliche Teile aufweist, vorzugsweise paternosterartig aufgebaut ist, und eingerichtet ist, um die darin gelagerten Bauteile an eine Position zu bringen, an der ein gewünschtes Bauteil vom Roboterarm (20, 21) greifbar und/oder während eines Sterilisations- und/oder Reinigungsprozess des Reinraums (50) mit einem entsprechenden Medium beaufschlagbar ist.

14. Vorrichtung nach einem der Ansprüche 9 bis 13, **dadurch gekennzeichnet, dass**
der Roboterarm (11, 31) ein Greifwerkzeug, vorzugsweise ein zangenförmiges Greifwerkzeug, zum Greifen der Bauteile aufweist,
Bauteile zumindest einer ersten Bauteilart und einer zweiten Bauteilart vorgesehen sind, und die Bauteile der ersten Bauteilart und die Bauteile der zweiten Bauteilart einen identischen, kompatiblen und/oder genormten Handhabungsbereich, an dem die Bauteile vom Greifwerkzeug des Roboterarms (11, 31) zu greifen sind, aufweisen, wobei der Handhabungsbereich vorzugsweise einen vorstehenden Bolzen umfasst.

15. Vorrichtung nach einem der Ansprüche 9 bis 14, **dadurch gekennzeichnet, dass** eine Vorrichtung (120) zum Befüllen der Behälter mit einem Füllprodukt, umfassend vorzugsweise ein Füllerkarussell (121), mit zumindest einem Füllventil und einer zugeordneten CIP-Kappe im Reinraum (50) vorgesehen ist, wobei die CIP-Kappe und das Füllventil als eine Einheit aufgebaut und/oder handhabbar sind, so dass diese gleichzeitig vom Roboterarm (11, 31) austauschbar sind, und/oder
mehrere Robotereinrichtungen (10, 30) mit jeweils zumindest einem Roboterarm (11, 31), angeordnet im Reinraum (50), vorgesehen sind, und/oder
der Roboterarm (11, 31) einen Zugriffsbereich aufweist, in welchem zumindest zwei Karusselle zumindest bereichsweise angeordnet sind.

## Claims

1. Method for changing components of a device for processing a container, preferably for blow-molding the container and/or filling the container with a filling product and/or closing the container with a closure in a beverage filling plant (100), wherein the device has a clean room (50) in which a sterile atmosphere is formed and at least one robot apparatus (10, 30) with at least one robot arm (11, 31) which is arranged in the clean room (50), and
the robot arm (11, 31) disassembles an exchangeable component of the device in the clean room (50) and exchanges it for another component and/or adjusts an adjustable component in the clean room (50),
**characterized in that**
the access area of the robot arm (11, 31) extends to two machines and/or conveyors and/or two carousels.

2. Method according to claim 1, **characterized in that** the two components exchanged for one another are each part of a set for different container formats and/or filling products, and/or
the two components exchanged for one another are part of a device (110) for producing containers by blow molding, preferably a blowing carousel (113), a device (120) for filling the containers with a filling product, preferably a filling carousel (121), and/or a device (130) for closing the containers with container closures, preferably a closer carousel (131), and/or
the two components exchanged for one another are or have gripping elements, holding devices, clamps or guides for holding and/or transporting containers, treatment elements, preferably filling valves, closer heads or blow molds, preferably blow mold halves, or CIP caps.

3. Method according to any one of the preceding claims, **characterized in that** the clean room (50) is subjected to automatic cleaning and/or sterilization by means of heat or a fluid, preferably at regular intervals, and the non-assembled component is deposited by the robot arm (11, 31) in a storage location in the clean room (50) so that it is included in the sterilization and/or cleaning process of the clean room (50).

4. Method according to any one of the preceding claims, **characterized in that** the robot arm (11, 31) disassembles the exchangeable component, deposits it in a magazine (20, 21) in the clean room (50), removes another component from this or another magazine (20, 21) which is located in the clean room (50) and assembles the another component.

5. Method according to claim 4, **characterized in that** the magazine (20, 21) has movable parts, preferably has a paternoster-like structure, in order to bring the components stored therein to a position in which a desired component is gripped by the robot arm (20, 21) and/or is acted upon by a corresponding medium during a sterilization and/or cleaning process of the clean room (50).

6. Method according to any one of the preceding claims, **characterized in that** the robot arm (11, 31) has a gripping tool, preferably a pincer-like gripping tool, for gripping the components, and components of at least a first component type and a second component type are gripped by the gripping tool and exchanged for corresponding components.

7. Method according to claim 6, **characterized in that** the components of the first component type and the components of the second component type have an identical, compatible and/or standardized handling area, at which the components are gripped by the gripping tool of the robot arm (11, 31), wherein the handling area preferably comprises a projecting pin.

8. Method according to any one of the preceding claims, **characterized in that** a device (120) for filling the containers with a filling product, preferably comprising a filler carousel, with at least one filling valve and an associated CIP cap is provided in the clean room (50), wherein the CIP cap and the filling valve are simultaneously exchanged as a unit by the robot arm (11, 31).

9. Device for handling a container, preferably for blow-molding the container and/or filling the container with a filling product and/or closing the container with a closure in a beverage filling plant (100), wherein the device comprises:
a clean room (50), in which a sterile atmosphere can be formed;
at least one exchangeable and/or adjustable component, arranged in the clean room (50); and
at least one robot apparatus (10, 30) with at least one robot arm (11, 31), which is arranged in the clean room (50) and is configured to exchange the exchangeable component for another component and/or adjust the adjustable component in the clean room (50), wherein the robot arm (11, 31) is preferably encased at least in some areas by bellows (12, 32) or another flexible casing.
**characterized in that**
the access area of the robot arm (11, 31) extends to two machines and/or conveyors and/or two carousels.

10. Device according to claim 9, **characterized in that** a device (110) for producing containers by blow molding, preferably comprising a blow carousel (113), and/or a device (120) for filling the containers with a filling product, preferably comprising a filler carousel (121), and/or a device for closing the containers with container closures, preferably comprising a closer carousel (131), are provided, which are arranged at least partially in the clean room (50).

11. Device according to claim 9 or 10, **characterized in that** means for the automatic cleaning and/or sterilization of the clean room (50) are provided and the robot arm (11, 31) is configured to deposit the non-assembled component at such a storage location in the clean room (50) that it is included in the sterilization and/or cleaning process of the clean room (50).

12. Device according to any one of claims 9 to 10, **characterized in that** at least one magazine (20, 21) is provided for storing and providing one or more exchangeable components in the clean room (50) and the robot arm (11, 31) is configured to disassemble an exchangeable component in the clean room (50), to deposit it in the magazine (20, 21) in the clean room (50), to remove another component from this or another magazine (20, 21) which is located in the clean room (50) and to assemble it in the clean room (50).

13. Device according to claim 12, **characterized in that** the magazine (20, 21) has movable parts, preferably has a paternoster-like structure, and is configured to bring the components stored therein to a position in which a desired component can be gripped by the robot arm (20, 21) and/or can be acted upon by a corresponding medium during a sterilization and/or cleaning process of the clean room (50).

14. Device according to any one of claims 9 to 13, **characterized in that** the robot arm (11, 31) has a gripping tool, preferably a pincer-like gripping tool, for gripping the components,
components of at least a first component type and a second component type are provided, and the components of the first component type and the components of the second component type have an identical, compatible and/or standardized handling area, at which the components are to be gripped by the gripping tool of the robot arm (11, 31), wherein the handling area preferably comprises a projecting pin.

15. Device according to any one of claims 9 to 14, **characterized in that** a device (120) for filling the containers with a filling product, preferably comprising a filler carousel (121), with at least one filling valve and an associated CIP cap is provided in the clean room (50), wherein the CIP cap and the filling valve are constructed and/or can be handled as a unit, so that they can be exchanged simultaneously by the robot arm (11, 31), and/or
a plurality of robot apparatuses (10, 30) are provided each with at least one robot arm (11, 31), arranged in the clean room (50), and/or
the robot arm (11, 31) has an access area in which at least two carousels are arranged at least in some areas.

## Revendications

1. Procédé de changement de composants d'un dispositif de traitement d'un récipient, de préférence de moulage par soufflage du récipient et/ou de remplissage du récipient avec un produit de remplissage et/ou de fermeture du récipient avec une fermeture dans une installation de remplissage de boissons (100), dans lequel le dispositif présente une salle blanche (50), dans laquelle une atmosphère stérile est formée, ainsi qu'au moins un appareil de robot (10, 30) avec au moins un bras de robot (11, 31) qui est agencé dans la salle blanche (50), et
le bras de robot (11, 31) démonte un composant interchangeable du dispositif dans la salle blanche (50) et l'échange contre un autre composant et/ou règle un composant réglable (50) dans la salle blanche (50),
**caractérisé en ce que**
la zone d'accès du bras de robot (11, 31) s'étend sur deux machines et/ou transporteurs et/ou deux carrousels.

2. Procédé selon la revendication 1, **caractérisé en ce que** les deux composants échangés l'un contre l'autre font chacun partie d'un ensemble pour différents formats de récipient et/ou produits de remplissage, et/ou
les deux composants échangés l'un contre l'autre font partie d'un dispositif (110) de fabrication de récipients par moulage par soufflage, de préférence d'un carrousel de soufflage (113), d'un dispositif (120) de remplissage de récipients avec un produit de remplissage, de préférence d'un carrousel de remplissage (121), et/ou d'un dispositif (130) de fermeture de récipients avec des fermetures de récipient, de préférence d'un carrousel de fermeture (131), et/ou
les deux composants échangés l'un contre l'autre sont ou présentent des éléments de préhension, des dispositifs de retenue, des pinces ou des guidages pour retenir et/ou transporter des récipients, des organes de traitement, de préférence des soupapes de remplissage, des têtes de fermeture ou des moulages de soufflage, de préférence des moitiés de moulage de soufflage, ou des capuchons CIP.

3. Procédé selon l'une quelconque des revendications précédentes, **caractérisé en ce quela** salle blanche (50) est soumise à un nettoyage et/ou une stérilisation automatique au moyen de la chaleur ou d'un fluide, de préférence à intervalles réguliers, et le composant non monté est déposé par le bras de robot (11, 31) à un emplacement de stockage dans la salle blanche (50) afin que celui-ci soit inclus dans le processus de stérilisation et/ou de nettoyage de la salle blanche (50).

4. Procédé selon l'une quelconque des revendications précédentes, **caractérisé en ce que** le bras de robot (11, 31) démonte le composant interchangeable, le dépose dans un magasin (20, 21) dans la salle blanche (50), enlève et monte un autre composant de celui-ci ou d'un autre magasin (20, 21) qui se trouve dans la salle blanche (50).

5. Procédé selon la revendication 4, **caractérisé en ce que** le magasin (20, 21) présente des parties mobiles, de préférence est assemblé comme un pater-noster afin d'amener les composants logés dans celui-ci dans une position dans laquelle un composant souhaité est saisi par le bras de robot (20, 21) et/ou est alimenté par un milieu correspondant pendant un processus de stérilisation et/ou de nettoyage de la salle blanche (50).

6. Procédé selon l'une quelconque des revendications précédentes, **caractérisé en ce que** le bras de robot (11, 31) présente un outil de préhension, de préférence un outil de préhension en forme de pince pour la préhension des composants et des composants au moins d'un premier type de composant et d'un second type de composant sont saisis par l'outil de préhension et sont échangés contre des composants correspondants.

7. Procédé selon la revendication 6, **caractérisé en ce que** les composants du premier type de composant et les composants du second type de composant présentent une zone de manipulation identique, compatible et/ou normée, au niveau de laquelle les composants sont saisis par l'outil de préhension du bras de robot (11, 31), dans lequel la zone de manipulation comprend de préférence un boulon en saillie.

8. Procédé selon l'une quelconque des revendications précédentes, **caractérisé en ce qu' un** dispositif (120) est prévu pour le remplissage des récipients avec un produit de remplissage, comprenant de préférence un carrousel de remplissage, avec au moins une soupape de remplissage et un capuchon CIP associé dans la salle blanche (50), dans lequel le capuchon CIP et la soupape de remplissage sont échangés comme une unité simultanément par le bras de robot (11, 31).

9. Dispositif de traitement d'un récipient, de préférence de moulage par soufflage du récipient et/ou de remplissage du récipient avec un produit de remplissage et/ou de fermeture du récipient avec une fermeture dans une installation de remplissage de boissons (100), dans lequel le dispositif présente :
une salle blanche (50), dans laquelle une atmosphère stérile peut être formée ;
au moins un composant interchangeable et/ou réglable, agencé dans la salle blanche (50) ; et
au moins un appareil robot (10, 30) avec au moins un bras de robot (11, 31) qui est agencé et conçu dans la salle blanche (50) afin d'échanger le composant interchangeable contre un autre composant et/ou de régler le composant réglable dans la salle blanche (50), dans lequel le bras de robot (11, 31) est entouré de préférence au moins par endroits par un soufflet (12, 32) ou une autre enveloppe flexible,
**caractérisé en ce que**
la zone d'accès du bras de robot (11, 31) s'étend sur deux machines et/ou transporteurs et/ou deux carrousels.

10. Dispositif selon la revendication 9, **caractérisé en ce qu' un** dispositif (110) de fabrication de récipients par moulage par soufflage comprenant de préférence un carrousel de soufflage (113), et/ou un dispositif (120) de remplissage de récipients avec un produit de remplissage, comprenant de préférence un carrousel de remplissage (121), et/ou un dispositif de fermeture de récipients avec des fermetures de récipient, comprenant de préférence un carrousel de fermeture (131) sont prévus, lesquels sont agencés au moins partiellement dans la salle blanche (50).

11. Procédé selon la revendication 9 ou 10, **caractérisé en ce que** des moyens de nettoyage et/ou de stérilisation automatique de la salle blanche (50) sont prévus et le bras de robot (11, 31) est conçu afin de déposer le composant non monté à un emplacement de stockage dans la salle blanche (50) afin que celui-ci soit inclus dans le processus de stérilisation et/ou de nettoyage de la salle blanche (50).

12. Dispositif selon l'une quelconque des revendications 9 à 10, **caractérisé en ce qu'** au moins un magasin (20, 21) est prévu pour le stockage et la fourniture d'un ou plusieurs composants interchangeables dans la salle blanche (50) et le bras de robot (11, 31) est conçu afin de démonter un composant interchangeable dans la salle blanche (50), de le déposer dans le magasin (20, 21) dans la salle blanche (50), de retirer un autre composant de celui-ci ou d'un autre magasin (20, 21) qui se trouve dans la salle blanche (50) et de le monter dans la salle blanche (50).

13. Procédé selon la revendication 12, **caractérisé en ce que** le magasin (20, 21) présente des parties mobiles, de préférence est assemblé comme un pater-noster, et est conçu afin d'amener les composants logés dans celui-ci dans une position, dans laquelle un composant souhaité peut être saisi par le bras de robot (20, 21) et/ou est alimenté par un milieu correspondant pendant un processus de stérilisation et/ou de nettoyage de la salle blanche (50).

14. Dispositif selon l'une quelconque des revendications 9 à 13, **caractérisé en ce quele** bras de robot (11, 31) présente un outil de préhension, de préférence un outil de préhension en forme de pince pour la préhension des composants,
des composants d'au moins un premier type de composant et d'un second type de composant sont prévus, et les composants du premier type de composant et les composants du second type de composant présentent une zone de manipulation identique, compatible et/ou normée, au niveau de laquelle les composants doivent être saisis par l'outil de préhension du bras de robot (11, 31), dans lequel la zone de manipulation comprend de préférence un boulon en saillie.

15. Procédé selon l'une quelconque des revendications 9 à 14, **caractérisé en ce qu' un** dispositif (120) est prévu pour le remplissage de récipients avec un produit de remplissage, comprenant de préférence un carrousel de remplissage (121), avec au moins une soupape de remplissage et un capuchon CIP associé dans la salle blanche (50), dans lequel le capuchon CIP et la soupape de remplissage sont constitués et/ou manipulables comme une unité de sorte que ceux-ci puissent être échangés simultanément par le bras de robot (11, 31), et/ou
plusieurs appareils robot (10, 30) sont prévus avec respectivement au moins un bras de robot (11, 31) agencé dans la salle blanche (50), et/ou
le bras de robot (11, 31) présente une zone d'accès, dans laquelle au moins deux carrousels sont agencés au moins par endroits.
